# EUROPEAN PATENT SPECIFICATION

(11) **EP 3 386 642 B1**
(45) Date of publication and mention of the grant of the patent: **30.08.2023**
(21) Application number: 16872498.7
(22) Date of filing: 14.11.2016
(51) Int. Cl.: B05D 7/22, B05C 3/109, B05C 7/04, B01J 35/04, B05C 11/10, F01N 3/28, B01J 37/02, B05D 3/04

(54) **SYSTEMS AND METHODS FOR SOLUTION COATING A SUBSTRATE**
SYSTEME UND VERFAHREN ZUR LÖSUNGSBESCHICHTUNG EINES SUBSTRATS
SYSTÈMES ET PROCÉDÉS DE REVÊTEMENT EN SOLUTION D'UN SUBSTRAT

(30) Priority: 09.12.2015 US 201562264978 P
(43) Date of publication of application: 17.10.2018
(73) Proprietor: BASF Corporation, Florham Park, NJ 07932 (US)
(72) Inventor: GRAMICCIONI, Gary A., Madison, Alabama 35758 (US); PILLAI, Krishnan S., Huntsville, Alabama 35824 (US)
(74) Representative: Altmann Stößel Dick Patentanwälte PartG mbB
(86) International application number: PCT/IB2016/056848
(87) International publication number: WO 2017/098355

(56) References cited:
- EP-A1- 0 941 763
- EP-A1- 1 136 462
- EP-A1- 1 273 344
- US-A- 5 953 832
- US-A1- 2007 191 217
- US-A1- 2011 274 835
- US-A1- 2012 321 537
- US-A1- 2013 122 196
- US-A1- 2013 122 196
- US-B1- 6 599 570

## Description

### FIELD OF THE DISCLOSURE

The present disclosure relates to a coating station and a method for coating a substrate with a low viscosity coating solution in the coating station.

### BACKGROUND

Catalytic converters are well known for the removal and/or conversion of the harmful components of exhaust gases. While catalytic converters have a variety of constructions for this purpose, one form of construction is a catalytically coated rigid skeletal monolithic substrate, or honeycomb-type element which has a multiplicity of longitudinal channels or cells to provide a catalytically coated body having a high surface area. The rigid, monolithic substrate can be fabricated from ceramics and other materials. Such materials and their construction are described, for example, in U.S. Pat. Nos. 3,331,787 and 3,565,830.

In the forth-going , 1 inch equals 2,54 cm. A monolithic honeycomb substrate will typically have an inlet end and an outlet end, with multiple mutually adjacent cells extending along the length of the substrate body from the inlet end to the outlet end. These honeycomb substrates typically have from about 100 to 600 cells-per-square-inch (cpsi); however, cell density can be in the range of about 10 cpsi to about 1200 cpsi. The cells can have round, square, triangular, or hexagonal cell shapes.

The open frontal area of a monolithic honeycomb substrate may comprise about 50% to about 85% of the surface area, and the cell wall thickness may be about 0.5 mils to about 10 mils, where 1 mil is 0.001 inches. The cells also may be separated from one another by walls with a thickness in the range of about 0.5 mils to about 60 mils (0.012 mm to 1.5 mm). The open frontal area may be as much as 91% for a 600 cpsi substrate with 2 mil cell wall thickness.

The cell walls of the substrate may be porous or non-porous, smooth, or rough. For porous walls, an average wall pore diameter may be from about 0.1 microns to about 100 microns, and wall porosity can be in the range of 10% to about 85%.

Such monolithic catalytic substrates may have one, two, or more catalytic coatings deposited on the cell walls of the substrate. The catalytic material may be carried as a dissolved compound in a solution or as a suspended solid in a slurry. The carrier and coating is introduced into the cells and deposits on the walls in a wet state that may then be dried and calcined. This coating process has involved using a vacuum to suck up the solution or slurry an intended distance into the cells, where an intended amount of catalytic material may then adhere to the walls when the carrier liquid is removed. The coating operation may not deposit the same amount of catalytic material onto the walls of different cells, or may not suck the solution or slurry a uniform distance into each of the cells. Moreover, low viscosity materials can be difficult to evenly distribute through the substrate, and it can be difficult to accurately draw a low viscosity material into a substrate by an applied vacuum (e.g., avoiding overshoot and fouling of equipment). Further, when using known systems for drawing a solution into a substrate, it is common for solutions with a low solids content to drip out of the substrate or otherwise contact equipment and/or personnel in an undesirable manner. It would be desirable to decrease the time required for coating a monolithic catalytic substrates while increasing the homogeneity of the depth and loading of catalytic material to improve manufacturing efficiency. It likewise would be desirable to address the further difficulties noted above.

EP 0 941 763 A1 discloses a process for coating a cylindrical, monolithic honeycomb-form catalyst carrier with a coating dispersion, said carrier having axially aligned flow channels arranged in a grid over its cross sectional area, said carrier having an upper and a bottom face, and said process comprising the steps of a) bringing said carrier in an upright position so as to orient the flow channels vertically; b) filling said flow channels through the bottom face with a volume of said coating dispersion which is about 10% greater than the empty volume of the flow channels, so that after completion of the filling cycle said upper face is flooded by the coating dispersion: c) removing excess coating dispersion from the upper face of said carrier; d) emptying and clearance extraction of the flow channels through an extraction impulse, which is generated by connecting a vacuum tank via an extraction conduit with the bottom face of the catalyst carrier, whereby the time between the beginning of the fill cycle and the end of the emptying and clearance extraction amounts to no more than about 5 seconds, and optionally drying and calcining the coated catalyst carrier after said emptying and clearance extraction of the flow channels.

US 2013/122196 A1 discloses a coating apparatus for forming a coating layer on a monolith substrate comprising: a liquid-precursor source in fluidic communication with a general inlet interface; a general outlet interface in fluidic communication with a drawing system; an elastically deformable sleeve that laterally surrounds the monolith substrate to form a sleeved monolith substrate and prevents lateral leakage of a vacuum out of the monolith substrate when the vacuum is applied to opposing ends of the monolith substrate not surrounded by the elastically deformable sleeve; an inlet substrate receptor positioned between the general inlet interface and the sleeved monolith substrate; and an outlet substrate receptor positioned between the general outlet interface and the sleeved monolith substrate, wherein; the sleeved monolith substrate is removably interposed between the inlet substrate receptor and the outlet substrate receptor; the inlet substrate receptor accommodates a sleeve inlet end of the elastically deformable sleeve; the outlet substrate receptor accommodates a sleeve outlet end of the elastically deformable sleeve; and monolith channels of the monolith substrate are in fluidic communication with the general inlet interface and the general outlet interface.

### BRIEF SUMMARY OF THE DISCLOSURE

The present disclosure provides a coating system (100) comprising:
a coating vessel (110) including:
   a receiving chamber (112) defined by a wall (113) and configured for receiving a substrate (105);
   a fluid inlet (115) positioned below the receiving chamber (112); and
   a vessel valve (117) positioned below the receiving chamber (112);
a vessel cover (130) configured for a fluid-tight engagement with the coating vessel (110);
a fill sensor (135);
a supply pump (120) configured to deliver a coating solution to the fluid inlet (115);
a return pump (170) configured to receive the coating solution from the vessel valve (117); and
an optional vacuum pump (162);
wherein the following conditions are met:
the receiving chamber (112) is configured so that the coating solution passes through the substrate (105) with substantially none of the coating solution passing between the substrate (105) and the wall (113) of the receiving chamber (112);
the fluid inlet (115) is positioned above the vessel valve (117);and
the fill sensor (135) can be positioned in the vessel cover (130).

The present disclosure also provides a method for coating a substrate with a low viscosity coating solution in the coating station (100) according to the presently claimed invention, the method comprising:
positioning a substrate (105) within a receiving chamber (112) of a coating vessel (110), the receiving chamber (112) being defined by a wall (113), and the substrate (105) being positioned so as to define a top and a bottom;
engaging a vessel cover (130) with the coating vessel (110) to form a fluid-tight engagement;
pumping the low viscosity coating solution through a fluid inlet (115) positioned below the receiving chamber (112) at a pressure sufficient to cause the coating solution to enter the receiving chamber (112), enter the bottom of the substrate (105), and migrate upward through pores or channels present in the substrate (105); and
opening a vessel valve (117) positioned below the receiving chamber (112) so as to allow a non-coating portion of the low viscosity coating solution to drain from the substrate (105) through the vessel valve (117) and leave a coating portion of the low viscosity coating solution in the pores or channels of the substrate (105).

The invention is set out in the appended set of claims.

### BRIEF DESCRIPTION OF THE FIGURES

In order to provide an understanding of embodiments of the invention, reference is made to the appended drawings, which are not necessarily drawn to scale, and in which reference numerals refer to components of exemplary embodiments of the invention. The drawings are exemplary only, and should not be construed as limiting the invention.
FIG. 1 is a schematic diagram of a coater system configured for providing a washcoat on a substrate according to one or more embodiments of the present disclosure;
FIG. 2A is a partial cross-section of a coating vessel and vessel cover according to an embodiment of the present disclosure, the coating vessel having a substrate partially disposed in a receiving chamber of the coating vessel in preparation for applying a washcoat to the substrate;
FIG. 2B is a further illustration of the embodiment in FIG. 2A, wherein the substrate is fully positioned in the receiving chamber, the vessel cover is engaged with the coating vessel, and coating solution is being pumped into the receiving chamber;
FIG. 2C is a further illustration of the embodiment of FIG. 2B, wherein the coating solution has been pumped fully through the substrate;
FIG. 2D is a further illustrate of the embodiment of FIG. 2C, wherein the non-coating portion of the coating solution has been drained from the substrate leaving the substrate with a washcoat thereon;
FIG. 3 is a flow chart illustrating a plurality of steps relating to the coating of a substrate according to exemplary embodiments of the present disclosure;
FIG. 4 is a diagram illustrating a multi-station coating system according to one or more embodiments of the present disclosure; and
FIG. 5 is a diagram illustrating a multi-station coating system according to one or more embodiments of the present disclosure.

### DETAILED DESCRIPTION OF THE DISCLOSURE

The present disclosure provides systems and methods suitable for coating a solution onto at least a portion of a substrate. In particular, a substrate having a plurality of pores and/or channels formed therein can be provided with a washcoat on the walls defining the pores and/or the channels.

In one or more embodiments, the washcoat, also referred to as a wet coating, may be formed by preparing a slurry containing a specified solids content (e.g., about 5% to about 60% by weight) of a catalyst or another material in a liquid carrier or vehicle, which is then coated onto a substrate and dried to provide a washcoat layer. As used herein, the term "washcoat" has its usual meaning in the art of a thin, adherent coating of a catalytic or other material applied to a substrate material, such as a honeycomb-type carrier member, which is sufficiently porous to permit the passage of a gas stream being treated. A washcoat or wet coating applied according to systems and methods of the present disclosure can comprise a metal catalyst. For example, the metal catalyst can be selected from the group consisting of calcium, barium, strontium, cerium, cesium, copper, iron, nickel, cobalt, manganese, chromium, vanadium, zirconium, and combinations thereof. The metals particularly may be in the form of a compound, such as a metal salt, that is soluble in a liquid carrier, particularly an aqueous carrier (e.g., H₂O). In some embodiments, the slurry may comprise alumina, molecular sieves, silica-alumina, zeolites, zirconia, titania, lanthana, and combinations thereof. In some embodiments, the slurry may comprise metal oxides, including but not limited to oxides of calcium, barium, strontium, cerium, cesium, copper, iron, nickel, cobalt, manganese, chromium, vanadium, and combinations thereof. In some embodiments, the slurry may comprise metal compounds that are not oxides but that are adapted to convert to a metal oxide before, during, or after deposition on the substrate. For example, various metal salts may be used. In certain exemplary embodiments, nickel nitrate may be provided in solution to be applied as a washcoat on a substrate, and the nickel nitrate can be reacted so as form nickel oxide on the substrate. Other non-limiting examples of metal salts that can be used include copper nitrate and iron nitrate.

In various embodiments, the concentration of the coating solution for preparing a washcoat may be about 0.5% to about 5% by weight of platinum group metal (PGM), or alternatively, the coating solution may have a concentration of about 1% to about 2% by weight of platinum group metal, or about 1.5% by weight of platinum group metal. In some embodiments, the total concentration of metal species in the coating solution can be about 0.5% to about 20% by weight, about 0.75% to about 15% by weight, or about 1% to about 10% by weight.

The coating solution, in some embodiments, can be a low viscosity coating solution. A low viscosity coating solution can be defined as being a solution with a viscosity of about 50 centipoise (cP) (50 mPa's) or less, for example, about 1 cP (1 mPa·s) to about 50 cP (50 mPa s). A low viscosity coating solution can be defined as being a solution with a viscosity of about 45 cP (45 mPa·s) or less, for example, about 2 cP (2 mPa·s) to about 45 cP (45 mPa s). A low viscosity coating solution can be defined as being a solution with a viscosity of about 40 cP (40 mPa·s) or less, for example, about 3 cP (3 mPa·s) to about450 cP (40 mPa s). A low viscosity coating solution can be defined as being a solution with a viscosity of about 35 cP (35 mPa·s) or less, for example, about 4 cP (4 mPa·s) to about 35 cP (35 mPa·s). A low viscosity coating solution can be defined as being a solution with a viscosity of about 30 cP (30 mPa·s) or less, for example, about 5 cP (5 mPa·s) to about 30 cP (mPa s). A low viscosity coating solution can be defined as being a solution with a viscosity of about 25 cP (25 mPa·s) or less, for example, about 5 cP (5 mPa·s) to about 25 cP (25 mPa·s). A low viscosity coating solution can be defined as being a solution with a viscosity of about 20 cP (20 mPa·s) or less, for example, about 5 cP (5 mPa·s) to about 20 cP (20 mPa·s).

A coating solution according to one or more embodiments of the present disclosure can be defined in relation to its total solids concentration, which can directly affect solution viscosity. Solids may comprise a metal species and/or alumina (e.g., zeolite) particles. Preferably, a coating solution according to the present disclosure will have a total solids concentration of about 1% to about 40% by weight, about 2% to about 35% by weight, about 3% to about 30% by weight, about 4% to about 25% by weight, or about 5% to about 20% by weight. In some embodiments, the coating solution can be limited to Newtonian fluids - i.e., fluids wherein flow viscosity and strain rate are linearly related at every point.

Undesirably, low viscosity solutions (i.e., solutions with a low solids content) can present containment difficulties when being applied using known systems and methods. For example, known systems utilize a vacuum to suction a solution into a substrate, and the substrate commonly must be flipped during the process. With low viscosity, low solids content solutions, such flipping can cause the solution to be "slung" from the substrate, fouling equipment and/or contacting personnel. Such conditions can be particularly undesirable when the coating solution includes a content of materials that may be considered undesirable for human contact, such as some metal-containing solutions. The presently disclosed systems and methods can substantially reduce and/or eliminate such problems.

A low viscosity coating solution according to the present disclosure can particularly be useful as a base coat upon which another catalytic material can be coated. Thus, the present disclosure specifically encompasses systems and methods configured for applying multiple washcoats to the same substrate.

A catalytic substrate useful according to various embodiments of the present disclosure can comprise a monolithic ceramic or metal honeycomb structure, and the monolithic substrate can have fine, parallel gas flow passages extending longitudinally such that the passages are open to fluid flow there through. The passages, which are essentially straight paths from their fluid inlet to their fluid outlet, are defined by walls on which the catalytic material is coated as a washcoat so that the gases flowing through the passages contact the catalytic material. The flow passages of the monolithic substrate can be thin-walled channels, which can be of any suitable cross-sectional shape and size such as trapezoidal, rectangular, square, sinusoidal, hexagonal, oval, circular, etc. Such structures may contain from about 60 to about 900 or more gas inlet openings (i.e., cells) per square inch of cross section.

In one or more embodiments, the catalytic substrate may have a circular cross-section, a rectangular cross-section, or a square cross-section, with a width, diagonal distance, or diameter in the range of about 2 inches to about 14 inches, and a length (height) in the range of about 2 inches to about 12 inches. In various embodiments, the catalytic substrate may have a width, diagonal distance, or diameter in the range of about 3 inches to about 7 inches, and a length (height) in the range of about 4 inches to about 8 inches. In certain embodiments, the height and the largest perpendicular dimension (width, length, diameter) does not exceed 7 inches.

In one or more embodiments, the present disclosure relates to a coating system. The system can be configured for applying a coating solution to a substrate, particularly a catalytic substrate, such as a monolithic ceramic or metal honeycomb structure. The coating system is particularly configured for applying a low viscosity coating solution. As noted above, when applying a low viscosity coating solution to a honeycomb substrate or the like, it can be difficult to precisely control the height through the substrate to which the solution is applied, and fouling of the equipment often occurs when the coating solution over-shoots the end of the substrate and is drawn into the vacuum equipment used to draw the solution through the substrate.

A coating system of the present disclosure can be configured to apply a coating solution to a substrate through application of positive pressure. In particular, the coating solution can be pumped from the below the substrate upwardly through the substrate. The coating system can be configured for pumping the coating solution, detecting completion of the coating of the substrate, and recovering excess coating solution from the substrate at least partially through only gravitational force. The functional aspects of the coating system will become more apparent in light of the description of an exemplary coating system as provided below.

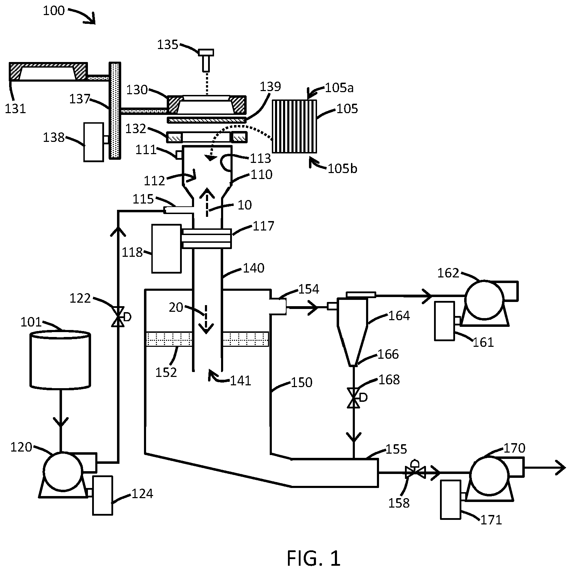

Referring to FIG. 1, a coating system 100 comprises a coating vessel 110 that includes a receiving chamber 112 that is defined by a wall 113. The receiving chamber 112 of the coating vessel 110 is configured for receiving a substrate 105. According to the invention, an inner diameter of the receiving chamber 112 is substantially identical to an outer diameter of the substrate 105. Such sizing can be useful to maximize flow of coating solution through the substrate and not around the outside of the substrate. In one or more disclosed but not claimed embodiments, for example, the clearance between the inside surface of the receiving chamber 112 and the outer surface of the substrate 105 can be about 12 mm or less, about 10 mm or less, about 8 mm or less, or about 5 mm or less. Thus, according to a disclosed but not claimed embodiment the inside diameter of the receiving chamber 112 can be greater than the outside diameter of the substrate 105, and the difference between the two diameters can be about 0.5 mm to about 12 mm, about 1 mm to about 10 mm, or about 2 mm to about 8 mm. In various embodiments, the receiving chamber 112 of the coating vessel 110 can have a cross-sectional shape that can be, for example, a circular shape, a rectangular shape, a square shape, a hexagonal shape, a triangular shape, or another geometric shape, and the shape of the receiving chamber is varied to conform to a substrate 105 having a substantially identical shape.

The substrate 105 can be positioned within the receiving chamber 112 so that a longitudinal axis of the substrate is substantially aligned with a longitudinal axis of the receiving chamber. A pressure sensor 111 (e.g., a transducer) can be positioned on the coating vessel 110 or in the receiving chamber 112 and can be configured for sensing the pressure within the receiving chamber.

The coating vessel 110 includes a fluid inlet 115 positioned below the receiving chamber 112. The fluid inlet 115 is in fluid connection with a supply pump 120 that is configured to deliver the coating solution to the fluid inlet. An inlet supply valve 122 can be interposed between the supply pump 120 and the fluid inlet 115. The supply pump 120 can be configured to deliver the coating solution from a supply source 101 to the fluid inlet 115 at a variable pressure that can be configured to force the coating solution against gravitational force upward (see arrow 10) into and through the substrate 105 positioned in the receiving chamber 112 of the coating vessel 110. The coating solution may be pumped at a substantially constant pressure, an increasing pressure, or a decreasing pressure. The supply pump 120, for example, can provide the coating solution as a pressure sufficient to at least support a column of fluid equivalent to the weight of the coating solution in the receiving chamber 112. In some embodiments, the system can comprise a supply pump controller 124 operatively associated with the supply pump 120 and configured to adjust the pressure at which the coating solution is delivered to the receiving chamber 112. For example, the supply pump controller 124 can adjust the pressure of the coating solution pumped through the supply pump 120 based upon a pressure reading taken from the pressure sensor 111.

The coating vessel 110 also includes a vessel valve 117 positioned below the receiving chamber 112 and positioned below the fluid inlet 115. In some embodiments, the vessel valve 117 can be a separate element from the coating vessel 110 but still be in fluid connection with the receiving chamber 112 of the coating vessel. The vessel valve 117 can specifically be a full port valve - i.e., having a pass-through opening of a size that is substantially identical to the size of the piping on either side of the valve. Preferably, the vessel valve 117 has a pass-through opening that is at least 85%, at least 90%, at least 95%, or at least 98% (such as about 85% to about 110% or about 90% to about 100%) of the size (e.g., diameter) of the piping on either side of the valve. The vessel valve 117 can be controllably opened and closed to allow coating solution to drain out of the receiving chamber 112 (and the substrate 110 present in the receiving chamber). The vessel valve 117 preferably provides a fluid tight seal at all pressures at which the coating solution may be pumped into the coating vessel 110 from the supply pump 120.

The coating system 100 comprises a vessel cover 130. While the receiving chamber 112 of the coating vessel 110 is configured for receiving the substrate 105, the receiving chamber can be configured so that substantially all of the substrate is received therein, or the receiving chamber can be configured so that a portion of the substrate extends from the top of the receiving chamber. As such, the vessel cover 130 can be configured in a disclosed but not claimed embodiment to fit over a top portion of the substrate 105, or according to the invention the vessel cover is configured to simply mate with the coating vessel 110. In a disclosed but not claimed embodiment, the vessel cover 130 can be configured to fit over about 1% to about 50% of the height of the substrate, more particularly about 2% to about 30%, about 3% to about 20, or about 5% to about 15% of the height of the substrate. The vessel cover 130 can be positioned relative to the coating vessel 110 so as to be coaxial therewith and may move longitudinally relative to the coating vessel. The longitudinal motion of the vessel cover 130 can be controlled by an actuator 137, which can include an actuator controller 138, which can cause automatic movement of the vessel cover based upon receipt of an input signal from a computing element. The vessel cover 130 may move linearly between an open position and a closed position (in contact with the coating vessel 110). The actuator 137 may also provide for rotational movement of the vessel cover or another cover (e.g., pressure cap 131) into and out of alignment with the coating vessel 110. The vessel cover 130 is configured for forming a fluid-tight engagement with the coating vessel 110. For example, one or both of the coating vessel 110 and the vessel cover 130 can include a gasket 139.

A fill sensor 135 is also included with the vessel cover 130 (although in a disclosed but not claimed embodiment such sensor may be included with the coating vessel 110). The fill sensor 135 can be configured to detect a fluid level within the receiving chamber 112 (which can include the overall volume defined by the wall 113 of the receiving chamber and the vessel cover 130. In particular, the fill sensor 135 can be configured to detect when the coating solution has reached a defined height within the receiving chamber 112 and/or when the coating solution has reached the inner surface of the vessel cover 130. The fill sensor 135 can be operatively connected with the supply pump controller 124 such that the supply pump 120 may be shut off when the desired amount of coating solution has been pumped to the receiving chamber 112 so as to sufficiently coat the substrate 105 therein.

Typically, the coating solution pumped into the receiving chamber 112 will substantially fill the empty volume of the channels and/or pores in the substrate. As it is typically desirable, however, to have open channels with only a washcoat of the coating solution on the channel walls, excess coating solution may be removed from the substrate. In the exemplary embodiments illustrated according to FIG. 1, the vessel valve 117 may be opened (such as under the control of the vessel valve controller 118) so that coating solution in the receiving chamber 112 (and excess coating solution in the substrate 105) can drain therefrom. Accordingly, a tail pipe 140 can extend below the vessel valve 117 and be in fluid connection therewith. Coating solution draining from the coating vessel 110 can pass through the vessel valve 117 and down through the tail pipe 140 as indicated by directional arrow 20. The draining coating solution can pass out of the tail pipe 140 through the outlet 141.

In the illustrated embodiments, the tail pipe 140 can extend into a collection box 150, which can provide several functions. For example, the collection box 150 can provide a vessel generally in which the coating solution can be collected. In some embodiments, though, it can be particularly useful to facilitate active draining of the coating solution from the coating vessel 110 and the substrate 105, and the collection box 150 can provide an intermediate vessel for application of a vacuum to the system. In one or more embodiments, the collection box 150 can include a suction port 154, which can be in fluid communication with a vacuum pump 162. Preferably, the suction port 154 can be positioned above the outlet 141 of the tail pipe 140 such that negative pressure may be applied through the tail pipe without substantial intake of coating solution to the vacuum pump 162 through the suction port. As illustrated, the collection box 150 further can include mist packing 152, which can be positioned between the outlet 142 of the tail pipe 140 and the suction port 154. The mist packing 152 preferably is air permeable but does not substantially reduce the suction pressure applied to the tail pipe 140 from the vacuum pump 162. Mist packing can be formed from any suitable material, such as natural or synthetic fibers, ceramics, and the like.

In some embodiments, a separator 164 can be between and in fluid connection with the vacuum pump 162 and the suction port 154. The separator 164 can be configured such that any coating solution that may pass through the suction port 154 can be collected therein and thus avoid fouling of the vacuum pump 162.

The system also include a return pump 170 that is configured to receive the coating solution draining from the coating vessel 110 through the vessel valve. The return pump 170 can be in fluid connection with the collection box 150 (although the pump may be directly connected to the tail pipe 141 or the vessel valve 117 (if desired). As illustrated in FIG. 1, the collection box 150 includes a transverse section 155 below the outlet 141 of the tail pipe 140. Coating solution draining into the collection box 150 can collect in the transverse section 155 and be withdrawn therefrom via the return pump 170. Coating solution moved via the return pump 170 can be returned directly to the supply source 101 and/or to a coating solution recycle container (not shown). A valve 158 can be positioned between the collection box 150 and the return pump 170 to control suction on the collection box 150 by the return pump 170.

Coating solution collected in the separator 164 can be returned or recycled to the supply source (or other container). For example, the separator 164 can include a spout 166 in fluid connection with the collection box 150, more particularly with the transverse section 155 of the collection box, which specifically can be at a position below the outlet 141 of the tail pipe 140. A valve 168 can be positioned in-line between the spout 166 of the separator 164 and the transverse section 155 of the collection box 150.

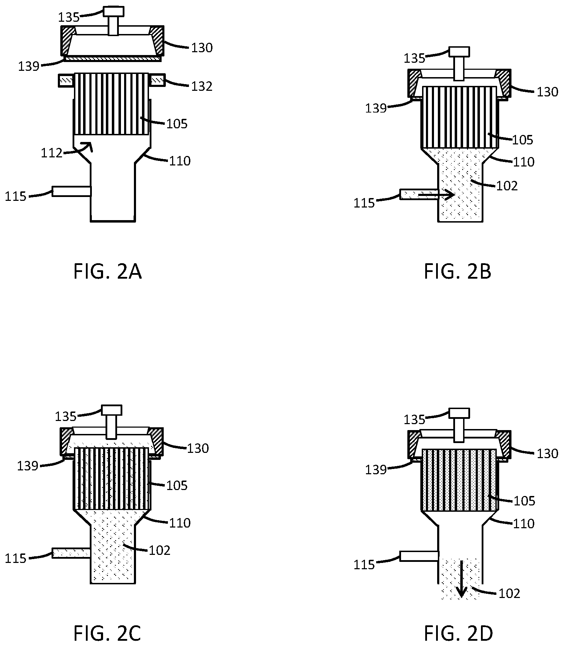

In use, a substrate 105 is positioned within the receiving chamber 112 of the coating vessel 110 in order to be coated with a coating solution. For example, a substrate clamp 132 can be configured to moveably engage the substrate 105 for placement within the receiving chamber 112 and optionally for movement from the coating system 100 to one or more further systems/modules where further actions can be taken relative to the substrate (e.g., drying, calcining, etc.). The coating is further illustrated in FIG. 2A through FIG. 2D. As illustrated in FIG. 2A, the substrate 105 is retained in the substrate clamp 132 and is partially inserted to the receiving chamber 112 of the coating vessel 110. In FIG. 2B, the substrate 105 is fully inserted into the receiving chamber 112, and the substrate clamp 132 has been removed. Other elements, such as an air bladder, may be used in place of the substrate clamp 132. A non-limiting example of an element that may be used as a substrate clamp according to the present disclosure is the gripper assembly described in U.S. Provisional Patent Application No. 62/140,103, filed March 30, 2015.

The vessel cover 130 is engaging the coating vessel 110, and a gasket 139 is utilized to ensure a fluid-tight engagement. The coating solution 102 is pumped through fluid inlet 115 to fill the lower portion of the coating vessel 110 and contact the substrate. Pumping continues until, as seen in FIG. 2C, the coating solution 102 has passed completely through the substrate 105 from the bottom surface 105a to the top surface 105b. The fill sensor 135 senses pass through of the coating solution 102, and pumping of the coating solution is stopped. Valve 122 may be closed at this point. The vessel valve 117 is then opened to allow excess coating solution 102 to empty out of the coating vessel 110 and the substrate 105. As seen in FIG. 2D, the coating solution 102 empties out of the coating vessel below the fluid inlet 115, and the substrate 105 is left with a wet coat of the coating solution thereon.

Because the coating solution 102 is pumped upward through the substrate 105 against gravity, passive draining can be used for removal of the excess coating solution from the substrate and the coating vessel 110. If desired, positive pressure (e.g., pumped air or other gas) may be applied against the top surface 105a of the substrate 105 while still in the coating vessel 110 to assist in removal of excess coating solution 102. For example, pulsed air may be pumped through the vessel cover 130. As such, the vessel cover 130 can also function as a pressure cap. Alternatively, the vessel cover 130 may be removed, and a separate pressure cap 131 may engage the coating vessel so that pulsed air can be applied to the substrate 105 through the pressure cap. In one or more embodiments, the vessel cover 130 can be disengaged from the coating vessel, and negative pressure can be applied to the bottom surface 105b of the substrate 105. Returning to FIG. 1, a vacuum can be applied by starting the vacuum pump 162 to drawn down the pressure below the substrate 105. Valve 168 and valve 158 can be closed to maximize draw at the outlet 141 of the tail pipe 140 so that excess coating solution 102 passes through the vessel valve 117 and into the collecting box 150. Once the substrate 105 has been sufficiently drained of excess coating solution 102, the vacuum pump 162 can be stopped, and the vessel valve 117 optionally can be closed. Valve 158 can be opened, and return pump 170 can be started to withdraw the collected coating solution 102 from the collecting box 150 through the transverse section 155. Valve 168 may be opened before starting the return pump 170 or during pumping by the return pump so that any coating solution separated in separator 164 can be recombined in the transverse section of the collecting box 150.

In FIG. 1, various elements of the coating system 100 are interconnected by lines with arrows indicating the direction of fluid flow through the system. It is understood that the respective lines can represent piping, ducts, or the like suitable for fluid flow therethrough under conditions as otherwise described herein.

In one or more embodiments, the coating system 100 can include one or more controllers and control elements configured for automated functioning of the system. For example, the coating system 100 can include a controller configured to receive a signal from the fill sensor 135 and send a control signal. In some embodiments, vessel valve controller 118 can be configured to receive a control signal related to a signal from the fill sensor 135, and the vessel valve controller can automatically open and/or close the vessel valve 117. In some embodiments, supply pump controller 124 can be configured to receive a control signal related to a signal from the fill sensor 135, and the supply pump controller 124 can automatically start, stop, increase an output pressure and/or decrease an output pressure of the supply pump 120. The supply pump controller 124 may also automatically open and/or close valve 122. Further, supply pump controller 124 can be configured to receive a pressure reading from pressure sensor 111, and the supply pump controller can automatically increase and/or decrease its output pressure based upon the pressure reading. In some embodiments, such as where a known volume of coating solution is to be pumped to the substrate, the supply pump controller 124 can be configured to automatically start and then stop after pumping of the specific volume of coating solution. As such, one or more flow sensors can be included with the supply pump 120 and/or with the coating vessel 110 and/or in a line between the supply pump and the coating vessel. Although supply pump controller 124 is illustrated as being in direct contact with the supply pump 120, and the vessel valve controller 118 is illustrated as being in direct contact with the vessel valve 117, it is understood that one or both of the respective controllers may be only in electrical connection with the respective element. As further examples, the coating system 100 can include one or more of an actuator controller 138 that can be configured to automatically direct movement of the actuator 137, a vacuum pump controller 161 that can be configured to automatically start, stop, increase vacuum pressure and/or decrease a vacuum pressure of the vacuum pump 162, and a return pump controller 171 that can be configured to automatically start, stop, increase a pump rate and/or decrease pump rate of the return pump 170. Again, although the three respective controllers are illustrated as being in direct contact with their three respective elements, it is understood that one or all of the respective controllers may be only in electrical connection with their respective elements. Moreover, while illustrated separately, it is understood that any two or more of controllers 118, 124, 138, 161, and 171 can be combined as a single controller that can provide the control functions of the combined controllers. In other words, any two or more of the vessel valve, the supply pump, the actuator 138, the vacuum pump 161, and the return pump 171 can be controlled by the same controller

In one or more embodiments, the present disclosure can provide methods for coating a substrate. In particular, the coating methods can be adapted for coating of a low viscosity coating solution. For example, a method for coating a substrate with a low viscosity coating solution can comprise the following steps: positioning a substrate within a receiving chamber of a coating vessel, the receiving chamber being defined by a wall, and the substrate being positioned so as to define a top and a bottom; engaging a vessel cover with the coating vessel to form a fluid-tight engagement; pumping the low viscosity coating solution through a fluid inlet positioned below the receiving chamber at a pressure sufficient to cause the coating solution to enter the receiving chamber, enter the bottom of the substrate, and migrate upward through pores or channels present in the substrate; and opening a vessel valve positioned below the receiving chamber so as to allow a non-coating portion of the low viscosity coating solution to drain from the substrate through the vessel valve and leave a coating portion of the low viscosity coating solution in the pores or channels of the substrate.

More particularly, in some embodiment, the substrate can be moved from a non-coating position to the receiving chamber, such as with the substrate clamp. The non-coating position can be, for example, a weighing station, a drying station, or a further station of a multi-station system for preparing a catalytic substrate.

During coating of the substrate, the coating solution can be pumped until a one or more conditions are met. In some embodiments, pumping can continue until the low viscosity coating solution reaches a pre-defined height in the receiving chamber. For example, pumping can continue until the coating solution reaches a height that substantially corresponds to the top of the substrate. In one or more embodiments, pumping can continue until a fill level control signal from a sensor is sent to a controller indicating that the low viscosity coating solution has sufficiently migrated upward through the pores or channels present in the substrate. For example, a fill level sensor positioned in the vessel cover can provide the fill signal whereby pumping may cease. Upon receipt of the fill level control signal, the controller can execute one or both of the following commands: automatically stop the supply pump that is pumping the low viscosity coating solution through the fluid inlet; and/or automatically open the vessel valve.

Once the coating solution has substantially filled the substrate, a portion of the coating solution will bond with the substrate so as to form a washcoat thereon, and another portion of the coating solution (i.e., the "non-coating" portion) is allowed to drain out of the substrate. The vessel valve can be opened, and the vessel cover optionally can be released, and the coating solution can drain through the vessel valve and pass through the outlet of a tail pipe and into the collection box. In some embodiments, after opening the vessel valve, the non-coating portion of the coating solution can be pumped from the collection box. The coating solution can be pumped directly back to the solution source or to an intermediate storage location. As such, the method can be characterized as recycling the non-coating portion of the coating solution so it can be used for further coating of a substrate. A controller can automatically start the return pump for pumping the non-coating portion of the coating solution, and such automatic control can be carried out at a defined time relative to the opening of the vessel valve.

The non-coating portion of the coating solution can be passively withdrawn - i.e., by draining by gravitational force; however, active withdrawal can also be carried out. For example, withdrawing can comprise drawing a vacuum through the collection box with the vacuum pump. In some embodiments, the controller can automatically start the vacuum pump at a defined time relative to the starting of the return pump. Disengaging the vessel cover from the coating vessel can be carried out at this point so as to sufficiently release the fluid-tight seal. In some embodiments, the controller can automatically disengage the vessel cover from the coating vessel at a defined time relative to starting of the vacuum pump.

In some embodiments, fractions of the non-coating portion of the coating solution can be captured in the separator that is positioned between and in fluid communication with the vacuum pump and the collection box. As such, the method can include emptying a fraction of the non-coating portion of the coating solution collected in the separator into the collection box at a position below the outlet of the tail pipe, such as the transverse portion. Such emptying can be specifically carried out after stopping of the vacuum pump. In exemplary embodiments, further automatic controls can be utilized. For example, a controller can automatically stop the vacuum pump based upon one or both of a sensor output and an algorithm related to flow of the non-coating portion of the low viscosity coating solution. The sensor output may relate to the flow of coating solution through the tail pipe and/or the drawn pressure through the tail pipe and/or the collection box and/or the separator. The algorithm may relate the calculated time for withdrawal of the non-coating portion of the coating solution based upon the calculated volume of total coating solution and the calculated volume of the non-coating portion of the coating solution. As a further example, a controller can automatically open a valve for emptying of the separator at a defined time relative to the stopping of the vacuum pump. In some embodiments, the controller can be configured to automatically open the valve below the separator substantially immediately upon stopping of the vacuum pump, and the controller can automatically close the valve after a defined time (e.g., a time calculated to be necessary for removal of the volume of coating solution present in the separator) or upon a reading from a flow sensor indicating that no further coating solution is present for withdrawal from the separator. As yet a further example, a controller can automatically close the vessel valve based upon one or both of a sensor output and an algorithm related to flow of the non-coating portion of the low viscosity coating solution. In some embodiments, a sensor can be present to indicate when substantially no further coating solution is draining from the coating vessel and/or a sensor can be present to indicate when substantially no further coating solution is moving through the transverse section of the collecting box. In other embodiments, an algorithm can calculate the volume of the non-coating portion of the coating solution that may be withdrawn from the substrate and the coating vessel based upon the total volume of the coating solution pumped from the solution storage tank.

The present methods further can include at least partially drying the coating portion of the low viscosity coating solution that is in the pores or channels of the substrate by carrying out one or more drying steps. Drying may be carried out in the coating vessel. Alternatively or additionally, drying may be carried out in a separate drying vessel. Still further, the present methods can include calcining the substrate with the at least partially dried coating portion of the low viscosity coating solution in the pores or channels thereof. Calcining can be carried out in a further module of a multi-station device, or at least partially dried substrates can be transferred to a separate calcining device.

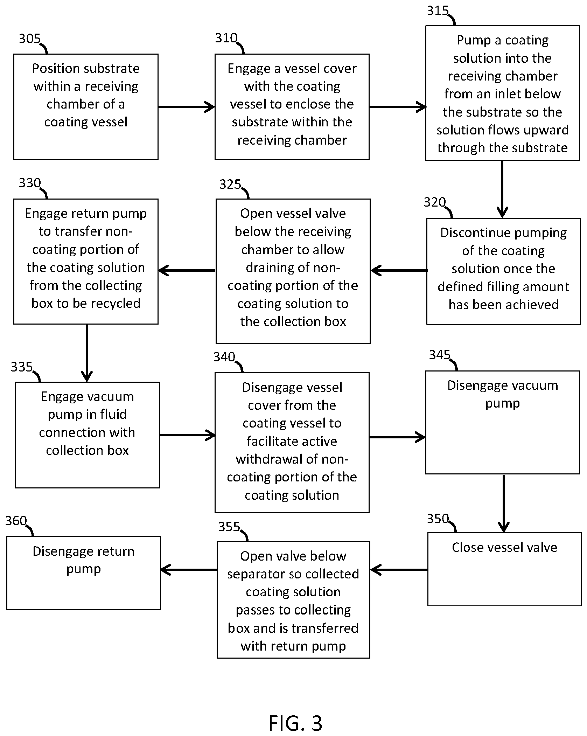

To further exemplify the present invention, methods of coating a substrate can be carried out according to the flow chart shown in FIG. 3. The methods thus can comprise introducing and affixing a coating, such as a catalytic coating, to one or more faces of the cells of a substrate comprising a plurality of pores and/or channels. The coating applied according to the present disclosure may be an undercoating (i.e., a coating over which a further coating will be applied) and/or the coating applied to the present disclosure may be an overcoating (i.e., a coating that is applied over an existing coating).

At 305, the substrate can be positioned within the receiving chamber of the coating vessel. Placement can be carried out with a moveable substrate clamp configured to grasp the substrate, align the substrate with the coating vessel, and lower the substrate into the receiving chamber of the coating vessel.

At 310, the vessel cover is engaged with the coating vessel so as to enclose the substrate within the receiving chamber. In the closed configuration, an interior surface of the vessel cover can define a top wall of the receiving chamber. A side wall and a bottom wall of the coating vessel may define the side wall and bottom wall of the receiving chamber. The bottom wall may have an opening therethrough for in-flow and/or out-flow of coating solution.

At 315, the coating solution can be pumped into the receiving chamber through an inlet that is positioned below the substrate. In this manner, the coating solution flows upward (i.e., against gravity) into the receiving chamber and through the substrate. The pumping pressure of the coating solution can be constant, can be variable, can be ramped up, and/or can be ramped down during the coating step.

At 320, pumping of the coating solution can be discontinued. Discontinuance can be based upon a defined filling amount of the coating solution having been pumped into the receiving chamber and/or into the substrate. In some embodiments, pumping can be discontinued when a fill level sensor indicates that a pre-determined fill level has been achieved. In certain embodiments, pumping can be discontinued when a certain volume of coating solution has been pumped. For example, the solution volume can be calculated based upon the total volume of the receiving chamber and the total open space volume (e.g., channel volume) within the substrate.

At 325, the vessel valve below the receiving chamber can be opened so as to allow for draining of the non-coating portion of the coating solution. More particularly, a coating portion of the coating solution will remain in contact with the surfaces of the walls forming the channels in the substrate, and a non-coating portion of the coating solution will be the portion that further filled the channels but did not adhere to or otherwise bond with the channel wall surfaces. The non-coating portion of the coating solution can be collected in a collecting box. The collecting box can be positioned below the coating vessel, and a tail pipe can extend from the vessel valve into the collecting box.

At 330, the return pump can be engaged to transfer collected coating solution from the collecting box to be recycled. The recycled coating solution can be transferred directly to the main storage unit for the coating solution or may be transferred to an intermediate unit.

At 335, the vacuum pump can be engaged to place a negative pressure on the substrate. The vacuum pump can be in fluid connection with the collecting box so that a negative pressure is formed in the collecting box and thus provide suction pressure at the bottom surface of the substrate (i.e., up through the tail pipe and the vessel valve) so as actively drain the non-coating portion of the coating solution from the substrate.

At 340, the vessel cover can be disengaged from the coating vessel. This can facilitate active withdrawal of the non-coating portion of the coating solution from the substrate.

At 345, the vacuum pump can be disengaged. At this point, there can be substantially no draining of coating solution from the substrate.

At 350, the vessel valve can be closed. No further amount of the coating solution may thus be withdrawn from the receiving chamber.

At 355, the valve below the separator is opened so that any coating solution collected in the separator that is in-line between the vacuum pump and the collecting box may be drained into the collecting box (e.g., the transverse section of the collecting box). Such amount of coating solution is pumped out of the collecting box by the return pump.

At 360, the return pump can be stopped. Any remaining open valves can be closed.

In one or more embodiments, the order of one or more of the above-noted steps may be varied. Moreover, one or more of the steps may be carried out substantially simultaneously. For example, steps 320 and 325 can be performed substantially simultaneously. Likewise, steps 335 and 340 can be performed substantially simultaneously. Further, steps 345 and 350 can be performed substantially simultaneously.

As discussed above, the coating system described herein can be included in a multi-station system for forming a catalyst element. In one or more embodiments, the present disclosure further can provide a modular, multi-station coater system for preparing a catalytic substrate.

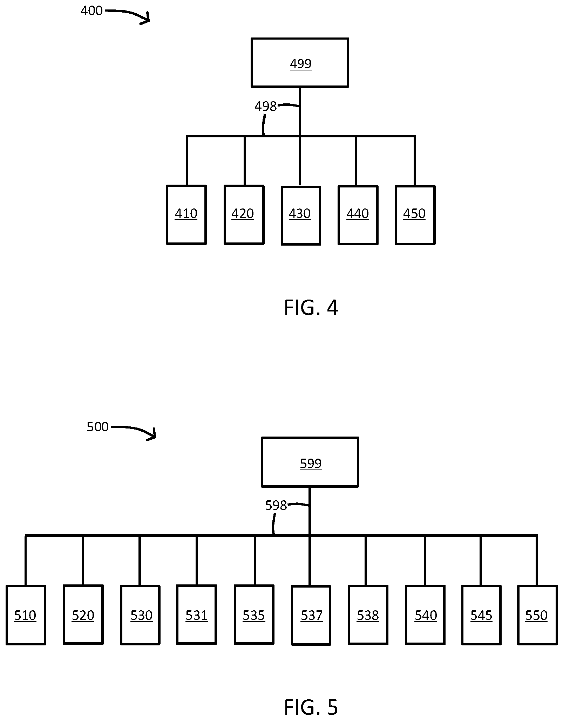

As illustrated in FIG. 4, in one or more embodiments, a multi-station coater system 400 may comprise a raw weight station 410, wherein an initial weight of a substrate is measured, a first coating station 420, where a wet coating is introduced into the longitudinal cells of the substrate, a first drying station 430, wherein a the wet coating solution coating the walls of the longitudinal cells of the substrate is at least partially dried, a first calcining station 440, where the catalytic coating is calcined on the substrate, and a dry weight station 450, wherein a final weight of the substrate with the dried and calcined catalyst material thereon is measured.

In various embodiments, a substrate may initially be weighed on the raw weight station 410 before any other processing steps to determine a baseline dry weight of the unprocessed substrate for comparison with substrate weights after the deposition of one or more catalytic coatings. The changes in weight may be used to calculate the amount of catalytic material(s) deposited on the walls of the substrate cells, and to determine if the substrate is within specification, while it is a work in progress, rather than a final product that may be out of specification. In various embodiments, the raw weight station 410 and the dry weight station 450 (and any further weight stations that may be utilized) may be a digital scale that may be connected to and in electrical communication with a controller 499 over a communication path 498. The controller 499 may be a computer configured to receive electric signals and/or information, store such received information, perform calculations on received, stored and/or programmed information, and send signals to other components connected to and in electrical communication with a controller over a communication path 498.

In some embodiments, a scale may be operatively associated with the drying station 430 and/or the calcining station 440 to determine the wet weight of a catalytic substrate after the application of the coating liquid to the catalytic substrate. A measure of the additional weight of the catalytic substrate after application of the washcoat may be calculated by the difference between the initial raw weight of the substrate and the wet weight measured by respective scales, to determine whether a correct amount of coating liquid was applied.

In one or more embodiments, a scale may be operatively associated with the calcining station to determine the weight of a catalytic substrate prior to the calcining of the washcoat to the face of the substrate cell walls. Likewise, a scale may be operatively associated with the calcining station to determine if the post-calcining weight falls within intended limits. If it is determined that a catalytic substrate has a weight after calcining that is outside intended limits, the catalytic substrate processing may be interrupted to allow adjustments, calibrations, and/or maintenance before additional substrates that may be out of specification are produced.

In various embodiments, a substrate may be weighed after each processing stage to provide statistical process control and/or process feedback to adjust the various processing parameters (e.g., wet coating viscosity, PGM concentration, ratio of slurry to carrier, drying time, calcining temperature, etc.) at each respective process station. Variations in the process(es) may thereby be followed as multiple substrates are processed by the system, and adjustments made to each of the inline stations and/or out-of-specification substrates removed from the processing sequence before additional time, energy, and expensive materials may be wasted on a defective or otherwise unusable substrate. By correcting deviations in the processing parameters and specifications in real time before a coating or substrate is out-of-specification, scrap may be reduced and the total throughput of the multi-station coater system increased, so at least 25%, 50% or even 100% more finished in-specification catalytic substrates are produced per unit time period (*e.g*., units per hour) than a coating system that operates in a batch-wise manner (*i.e*., a block of substrates are completed before testing and/or changes are made to the system).

In one or more embodiments, the substrate may be first weight to establish the raw weight of the substrate for comparison to the substrate weight at further phases of the coating process. The substrate may have a first wet coating introduced into the cells of the substrate by a first coating station 420 to deposit a first catalytic coating (*e*.*g*., PGM with or without a support material) over at least a portion of the walls of the cells. In various embodiments, the first coating station 420 may be a coating system as described herein, where the coating solution is pumped into the cells from below the substrate against gravity. The substrate may be dried at first drying station 430 to a desired level of dryness. The wet coating may be dried to remove at least a portion of the carrier fluid prior to being calcined. Removal of a sufficient amount of the carrier fluid allows the catalytic coating portion (*i*.*e*., slurry solids) to be retained on the surface(s) of the cells without dripping or running. Multiple drying stations may be used. The substrate may be calcined in the first calcining station 440 after the wet coating has been introduced into the substrate and at least partially dried. The catalytic coating may be calcined onto the surface(s) of the cells to provide a substrate with at least a portion of a bottom coat. In various embodiments, calcining of a catalytic coating may drive off remaining carrier fluid, thermally affix the catalytic coating on the cell walls, and/or convert the chemical structure (*e*.*g*., phase transition) and/or formula (e.g., chemical decomposition) of at least some of the catalytic coating. The calcined substrate may be weighed on the dry weight station 450 after the catalytic coating has been calcined on the substrate. The actual amount of catalytic coating deposited onto the walls of the cells may be calculated by comparing the initial raw weight of the substrate to the calcined weight of the substrate. The changes in weight may be used to calculate the amount of calcined catalytic material(s) (*e*.*g*., PGM and support, metal and molecular sieve, etc.) deposited on the walls of the substrate cells, and to determine if the weight of the calcined substrate is within specification before additional wet coatings are introduced into the substrate (if desired). If the actual amount of catalytic coating is greater or less than the intended amount, an operator may be alerted to the out-of-specification character of the substrate by an alarm, or the substrate may be discharged from the coater system. In various embodiments, an audible and/or visual signal may alert an operator that a substrate is out-of-specification, and/or the substrate may be physically ejected by the transfer mechanism or an ejection mechanism incorporated into or operatively associated with a weight station, where for example the transfer mechanism may open to allow the substrate to fall into a bin or the ejection mechanism is a push bar or air jet that forces a substrate off the scale into a bin.

In one or more embodiments, the present disclosure also can relate to a multi-station system for preparing a catalytic substrate. The system can comprise: at least one catalytic substrate coating station that applies at least one washcoat, also referred to as a wet coating or coating solution, comprising a catalytic slurry and a liquid carrier to at least a portion of the catalytic substrate: at least one drying station that removes at least a portion of the liquid carrier from the at least a portion of the catalytic substrate; at least one calcining station to calcine the catalytic slurry of the washcoat to the cell walls of the catalytic substrate; and a substrate gripper that holds the catalytic substrate and transfers the catalytic substrate between the at least on catalytic substrate coating station, the at least one drying station, and the at least one calcining station.

Further embodiments of a multi-station coater system 500 according to the present embodiment are provided in relation to FIG. 5. As illustrated, a multi-station coater system 500 can comprise: a raw weight station 510 configured for providing an initial weight of the substrate to be coated; a coater station 520 configured to apply a washcoat of a coating solution as described herein; a first finesse dry station 530 configured to dry the substrate to a dryness level wherein about 98% by weight to about 70% by weight, about 97% by weight to about 75% by weight, or about 95% by weight to about 80% by weight of the total liquid carrier in the total washcoat present on the substrate when leaving the coater station 520 is still present on the substrate; a second finesse dry station 531 configured to further dry the substrate to a dryness level wherein about 90% by weight to about 50% by weight, about 85% by weight to about 55% by weight, or about 80% by weight to about 60% by weight of the total liquid carrier in the total washcoat present on the substrate when leaving the coater station 520 is still present on the substrate; an intermediate dry station 535 configured to further dry the substrate to a dryness level wherein about 75% by weight to about 20% by weight, about 65% by weight to about 25% by weight, or about 60% by weight to about 30% by weight of the total liquid carrier in the total washcoat present on the substrate when leaving the coater station 520 is still present on the substrate; a first final dry station 537 configured to further dry the substrate to a dryness level wherein about 50% by weight to about 10% by weight, about 40% by weight to about 12% by weight, or about 30% by weight to about 15% by weight of the total liquid carrier in the total washcoat present on the substrate when leaving the coater station 520 is still present on the substrate; a second final dry station 538 configured to further dry the substrate to a dryness level wherein less than about 15% by weight, less than about 10% by weight, or less than about 5% by weight (e.g., about 15% by weight to about 0.1% by weight, about 10% by weight to about 0.2% by weight, or about 5% by weight to about 0.25% by weight of the total liquid carrier in the total washcoat present on the substrate when leaving the coater station 520 is still present on the substrate; a cooling station 545 wherein the calcined substrate is cooled to approximately room temperature; and a dry weight station 550 configured to measure the final weight of the catalytic substrate.

A multi-station coating system according to the present disclosure can include any combination of the stations described herein. Further, a multi-station coating system can include further elements, such as those described in U.S. Provisional Patent Application No. 62/140,103, filed March 30, 2015.

The use of the terms "a" and "an" and "the" and similar referents in the context of describing the materials and methods discussed herein (especially in the context of the following claims) are to be construed to cover both the singular and the plural, unless otherwise indicated herein or clearly contradicted by context. Recitation of ranges of values herein are merely intended to serve as a shorthand method of referring individually to each separate value falling within the range, unless otherwise indicated herein, and each separate value is incorporated into the specification as if it were individually recited herein. All methods described herein can be performed in any suitable order unless otherwise indicated herein or otherwise clearly contradicted by context. The use of any and all examples, or exemplary language (e.g., "such as") provided herein, is intended merely to better illuminate the materials and methods and does not pose a limitation on the scope unless otherwise claimed. No language in the specification should be construed as indicating any non-claimed element as essential to the practice of the disclosed materials and methods.

Reference throughout this specification to "one embodiment," "certain embodiments," "one or more embodiments" or "an embodiment" means that a particular feature, structure, material, or characteristic described in connection with the embodiment is included in at least one embodiment of the invention. Thus, the appearances of the phrases such as "in one or more embodiments," "in certain embodiments," "in one embodiment" or "in an embodiment" in various places throughout this specification are not necessarily referring to the same embodiment of the invention. Furthermore, the particular features, structures, materials, or characteristics may be combined in any suitable manner in one or more embodiments.

## Claims

1. A coating station (100) comprising:
a coating vessel (110) including:
a receiving chamber (112) defined by a wall (113) and configured for receiving a substrate (105);
a fluid inlet (115) positioned below the receiving chamber (112); and
a vessel valve (117) positioned below the receiving chamber (112);
a vessel cover (130) configured for a fluid-tight engagement with the coating vessel (110);
a fill sensor (135);
a supply pump (120) configured to deliver a coating solution to the fluid inlet (115);
a return pump (170) configured to receive the coating solution from the vessel valve (117); and
an optional vacuum pump (162);
wherein the following conditions are met:
the receiving chamber (112) is configured so that the coating solution passes through the substrate (105) with substantially none of the coating solution passing between the substrate (105) and the wall (113) of the receiving chamber (112);
the fluid inlet (115) is positioned above the vessel valve (117); and
the fill sensor (135) is positioned in the vessel cover (130).

2. The coating station (100) of claim 1, further comprising a tail pipe (140) extending below the vessel valve (117) and having outlet (141).

3. The coating station (100) of claim 2, wherein the tail pipe (140) extends into a collection box (150); preferably wherein the vacuum pump (162) is included and is in fluid connection with a suction port (154) on the collection box (150);
more preferably wherein one or both of the following conditions are met:
the suction port (154) is positioned above the outlet (141) of the tail pipe (140);
the coating station (100) further comprises a separator (164) between and in fluid communication with the vacuum pump (162) and the suction port (154), where the separator (164) more preferably comprises a spout (166) in fluid connection with the collection box (150) at a position below the outlet (141) of the tail pipe (140).

4. The coating station (100) of claim 1, further comprising a controller configured to receive a signal from the sensor and send a control signal; preferably wherein the controller is configured to control one or both of the supply pump (120) and the vessel valve (117).

5. The coating station (100) of claim 1, wherein one or both of the following conditions are met:
the coating station (100) further comprises a controller configured to receive a control signal and execute a control command relative to one or more of the return pump (170), the vacuum pump (162), and the vessel cover; the coating station (100) further comprises a substrate clamp (132) configured for moveably engaging the substrate (105).

6. A method for coating a substrate with a low viscosity coating solution in the coating station (100) according to claim 1, the method comprising:
positioning a substrate (105) within a receiving chamber (112) of a coating vessel (110), the receiving chamber (112) being defined by a wall (113), and the substrate (105) being positioned so as to define a top and a bottom;
engaging a vessel cover (130) with the coating vessel (110) to form a fluid-tight engagement; pumping the low viscosity coating solution through a fluid inlet (115) positioned below the receiving chamber (112) at a pressure sufficient to cause the coating solution to enter the receiving chamber (112), enter the bottom of the substrate (105), and migrate upward through pores or channels present in the substrate (105); and
opening a vessel valve (117) positioned below the receiving chamber (112) so as to allow a non-coating portion of the low viscosity coating solution to drain from the substrate (105) through the vessel valve (117) and leave a coating portion of the low viscosity coating solution in the pores or channels of the substrate (105).

7. The method of claim 6, wherein one or both of the following conditions are met:
said positioning comprises moving the substrate (105) from a non-coating position to the receiving chamber (112) with a moveable substrate clamp (132);
said pumping is carried out such that the low viscosity coating solution passes through the pores or channels of the substrate (105) with substantially none of the low viscosity coating solution passing between the substrate (105) and the wall (113) of the receiving chamber (112).

8. The method of claim 6, wherein said pumping continues until the low viscosity coating solution reaches a pre-defined height in the receiving chamber (112); preferably wherein the pre-defined height substantially corresponds to the top of the substrate (105).

9. The method of claim 6, wherein said pumping continues until a fill level control signal from a sensor is sent to a controller indicating the low viscosity coating solution has sufficiently migrated upward through the pores or channels present in the substrate (105).

10. The method of claim 9, wherein one or both of the following conditions are met:
the sensor is positioned in the vessel cover;
upon receipt of the fill level control signal, the controller executes one or both of the following commands:
automatically stops a supply pump (124) that is pumping the low viscosity coating solution through the fluid inlet (115);
automatically opens the vessel valve (117).

11. The method of claim 6, wherein the non-coating portion of the low viscosity coating solution draining through the vessel valve (117) passes through an outlet (141) of a tail pipe (140) and into a collection box (150).

12. The method of claim 11, wherein after opening the vessel valve (117), the method further comprises pumping the non-coating portion of the low viscosity coating solution from the collection box (150) and recycling the non-coating portion of the low viscosity coating solution for further coating of a substrate (105).

13. The method of claim 12, wherein a controller automatically starts a return pump (170) for pumping the non-coating portion of the low viscosity coating solution at a defined time relative to the opening of the vessel valve (117).

14. The method of claim 12, wherein after opening the vessel valve (117), the method further comprises actively withdrawing the non-coating portion of the low viscosity coating solution from the substrate (105); preferably wherein said actively withdrawing comprises drawing a vacuum through the collection box (150) with a vacuum pump (162);
more preferably wherein one or both of the following conditions are met:
a controller automatically starts the vacuum pump (162) at a defined time relative to the starting of the return pump (170);
the method comprises disengaging the vessel cover (130) from the coating vessel (110) sufficiently to release the fluid-tight seal, wherein a controller automatically more preferably disengages the vessel cover (130) from the coating vessel (130) at a defined time relative to starting of the vacuum pump (162).

15. The method of claim 11, wherein a separator (164) is positioned between and in fluid communication with the vacuum pump (162) and the collection box (150).

16. The method of claim 15, wherein the method comprises emptying a fraction of the non-coating portion of the low viscosity coating solution collected in the separator (164) into the collection box (150) at a position below the outlet (141) of the tail pipe (140); preferably wherein the method comprises stopping of the vacuum pump (162), and wherein said emptying is carried after the stopping of the vacuum pump (162); more preferably wherein one or more of the following conditions is met:
a controller automatically stops the vacuum pump (162) based upon one or both of a sensor output and an algorithm related to flow of the non-coating portion of the low viscosity coating solution;
a controller automatically opens a valve (168) for emptying of the separator (164) at a defined time relative to the stopping of the vacuum pump (162);
a controller automatically closes the vessel valve (117) based upon one or both of a sensor output and an algorithm related to flow of the non-coating portion of the low viscosity coating solution.

17. The method of claim 6, further comprising at least partially drying the coating portion of the low viscosity coating solution that is in the pores or channels of the substrate (105) by carrying out one or more drying steps; preferably further comprising calcining the substrate (105) with the at least partially dried coating portion of the low viscosity coating solution in the pores or channels thereof.

18. A multi-station coating system (400) comprising a coating station (420) according to any one of claims 1 to 5, wherein the multi-station coating system preferably further comprises one or more of a weighing station (410/450), a drying station (430), and a calcining station (440).

## Patentansprüche

1. Lackierungsstation (100), umfassend:
einen Lackierungsbehälter (110), der beinhaltet:
eine Aufnahmekammer (112), die durch eine Wand (113) definiert und zum Aufnehmen eines Substrats (105) konfiguriert ist;
einen Fluideinlass (115), der unterhalb der Aufnahmekammer (112) positioniert ist; und
ein Behälterventil (117), das unterhalb der Aufnahmekammer (112) positioniert ist;
eine Behälterabdeckung (130), die für einen fluiddichten Eingriff mit dem Lackierungsbehälter (110) konfiguriert ist;
einen Füllstandsensor (135);
eine Zufuhrpumpe (120), die konfiguriert ist, um eine Lackierungslösung an den Fluideinlass (115) zu liefern;
eine Rücklaufpumpe (170), die konfiguriert ist, um die Lackierungslösung von dem Behälterventil (117) aufzunehmen; und
eine optionale Vakuumpumpe (162);
wobei die folgenden Bedingungen erfüllt sind:
die Aufnahmekammer (112) konfiguriert ist, so dass die Lackierungslösung durch das Substrat (105) hindurchläuft, wobei im Wesentlichen keine Lackierungslösung zwischen dem Substrat (105) und der Wand (113) der Aufnahmekammer (112) läuft;
der Fluideinlass (115) über dem Behälterventil (117) positioniert ist; und
der Füllstandssensor (135) in der Behälterabdeckung (130) positioniert ist.

2. Lackierungsstation (100) nach Anspruch 1, ferner umfassend ein Endrohr (140), das sich unter dem Behälterventil (117) erstreckt und einen Auslass (141) aufweist.

3. Lackierungsstation (100) nach Anspruch 2, wobei sich das Endrohr (140) in einen Sammelhohlraum (150) erstreckt; vorzugsweise wobei die Vakuumpumpe (162) beinhaltet ist und mit einem Saugmund (154) auf dem Sammelhohlraum (150) in Fluidanschluss steht;
mehr bevorzugt wobei eine oder beide der folgenden Bedingungen erfüllt sind:
der Saugmund (154) über dem Auslass (141) des Endrohrs (140) positioniert ist;
die Lackierungsstation (100) ferner einen Separator (164) zwischen und in Fluidverbindung mit der Vakuumpumpe (162) und dem Saugmund (154) umfasst, wobei der Separator (164) mehr bevorzugt eine Tülle (166) in Fluidanschluss mit dem Sammelhohlraum (150) an einer Position unterhalb des Auslasses (141) des Endrohrs (140) umfasst.

4. Lackierungsstation (100) nach Anspruch 1, ferner umfassend eine Steuerung, die konfiguriert ist, um ein Signal von dem Sensor aufzunehmen und ein Steuersignal zu senden; vorzugsweise wobei die Steuerung konfiguriert ist, um eine oder beide von der Zufuhrpumpe (120) und dem Behälterventil (117) zu steuern.

5. Lackierungsstation (100) nach Anspruch 1, wobei eine oder beide der folgenden Bedingungen erfüllt sind:
die Lackierungsstation (100) ferner eine Steuerung umfasst, die konfiguriert ist, um ein Steuersignal aufzunehmen und einen Steuerbefehl relativ zu einem oder mehreren der Rücklaufpumpe (170), der Vakuumpumpe (162) und der Behälterabdeckung auszuführen; die Lackierungsstation (100) ferner eine Substratklemme (132) umfasst, die zum bewegbaren Eingreifen in das Substrat (105) konfiguriert ist.

6. Verfahren zum Lackieren eines Substrats mit einer Lackierungslösung niedriger Viskosität in der Lackierungsstation (100) nach Anspruch 1, das Verfahren umfassend:
Positionieren eines Substrats (105) innerhalb einer Aufnahmekammer (112) eines Lackierungsbehälters (110), wobei die Aufnahmekammer (112) durch eine Wand (113) definiert ist und wobei das Substrat (105) positioniert ist, um ein oberes Ende und ein unteres Ende zu definieren;
Ineingriffbringen einer Behälterabdeckung (130) mit dem Lackierungsbehälter (110), um einen fluiddichten Eingriff zu bilden; Pumpen der Lackierungslösung niedriger Viskosität durch einen Fluideinlass (115) hindurch, der unterhalb der Aufnahmekammer (112) positioniert ist, mit einem Druck, der ausreicht, um zu bewirken, dass die Lackierungslösung in die Aufnahmekammer (112) eintritt, in das untere Ende des Substrats (105) eintritt und durch Poren oder Kanäle hindurch, die in dem Substrat (105) vorhanden sind, nach oben wandert; und
Öffnen eines Behälterventils (117), das unterhalb der Aufnahmekammer (112) positioniert ist, um einem Nichtlackierungsteil der Lackierungslösung niedriger Viskosität zu ermöglichen, aus dem Substrat (105) durch das Behälterventil (117) hindurch abzulaufen, und ein Lackierungsteil der Lackierungslösung niedriger Viskosität in den Poren oder Kanälen des Substrats (105) verbleibt.

7. Verfahren nach Anspruch 6, wobei eine oder beide der folgenden Bedingungen erfüllt sind:
das Positionieren ein Bewegen des Substrats (105) von einer Nichtlackierungsposition zu der Aufnahmekammer (112) mit einer bewegbaren Substratklemme (132) umfasst;
das Pumpen derart durchgeführt wird, dass die Lackierungslösung niedriger Viskosität durch die Poren oder Kanäle des Substrats (105) hindurchläuft, wobei im Wesentlichen keine Lackierungslösung niedriger Viskosität zwischen dem Substrat (105) und der Wand (113) der Aufnahmekammer (112) läuft.

8. Verfahren nach Anspruch 6, wobei das Pumpen fortgesetzt wird, bis die Lackierungslösung niedriger Viskosität eine vordefinierte Höhe in der Aufnahmekammer (112) erreicht; vorzugsweise wobei die vordefinierte Höhe im Wesentlichen dem oberen Ende des Substrats (105) entspricht.

9. Verfahren nach Anspruch 6, wobei das Pumpen fortgesetzt wird, bis ein Füllstandssteuersignal von einem Sensor an eine Steuerung gesendet wird, das angibt, dass die Lackierungslösung niedriger Viskosität durch die Poren oder Kanäle hindurch, die in dem Substrat (105) vorhanden sind, ausreichend migriert ist.

10. Verfahren nach Anspruch 9, wobei eine oder beide der folgenden Bedingungen erfüllt sind:
der Sensor in der Behälterabdeckung positioniert ist;
bei Empfang des Füllstandssteuersignals die Steuerung einen oder beide der folgenden Befehle ausführt:
automatisches Anhalten einer Zufuhrpumpe (124), die die Lackierungslösung niedriger Viskosität durch den Fluideinlass (115) hindurchpumpt;
automatisches Öffnen des Behälterventils (117).

11. Verfahren nach Anspruch 6, wobei der Nichtlackierungsteil der Lackierungslösung niedriger Viskosität, der durch das Behälterventil (117) hindurch abläuft, durch einen Auslass (141) eines Endrohrs (140) hindurch und in einen Sammelhohlraum (150) läuft.

12. Verfahren nach Anspruch 11, wobei, nach dem Öffnen des Behälterventils (117), das Verfahren ferner das Pumpen des Nichtlackierungsteils der Lackierungslösung niedriger Viskosität aus dem Sammelhohlraum (150) und ein Recyceln des Nichtlackierungsteils der Lackierungslösung niedriger Viskosität zum weiteren Lackieren eines Substrats (105) umfasst.

13. Verfahren nach Anspruch 12, wobei eine Steuerung eine Rücklaufpumpe (170) zum Pumpen des Nichtlackierungsteils der Lackierungslösung niedriger Viskosität zu einem definierten Zeitpunkt relativ zu dem Öffnen des Behälterventils (117) automatisch startet.

14. Verfahren nach Anspruch 12, wobei, nach dem Öffnen des Behälterventils (117), das Verfahren ferner ein aktives Abziehen des Nichtlackierungsteils der Lackierungslösung niedriger Viskosität von dem Substrat (105) umfasst; vorzugsweise wobei das aktive Abziehen das Ziehen eines Vakuums durch den Sammelhohlraum (150) hindurch mit einer Vakuumpumpe (162) umfasst;
mehr bevorzugt wobei eine oder beide der folgenden Bedingungen erfüllt sind:
eine Steuerung die Vakuumpumpe (162) zu einem definierten Zeitpunkt relativ zu dem Starten der Rücklaufpumpe (170) automatisch startet;
das Verfahren ein ausreichendes Lösen der Behälterabdeckung (130) von dem Lackierungsbehälter (110) umfasst, um die fluiddichte Dichtung zu lösen, wobei mehr bevorzugt eine Steuerung die Behälterabdeckung (130) zu einem definierten Zeitpunkt relativ zu dem Starten der Vakuumpumpe (162) von dem Lackierungsbehälter (130) automatisch löst.

15. Verfahren nach Anspruch 11, wobei ein Separator (164) zwischen und in Fluidverbindung mit der Vakuumpumpe (162) und dem Sammelhohlraum (150) positioniert ist.

16. Verfahren nach Anspruch 15, wobei das Verfahren ein Entleeren eines Bruchteils des Nichtlackierungsteils der Lackierungslösung niedriger Viskosität, die in dem Separator (164) gesammelt wurde, in den Sammelhohlraum (150) an einer Position unterhalb des Auslasses (141) des Endrohrs (140) umfasst; vorzugsweise wobei das Verfahren das Anhalten der Vakuumpumpe (162) umfasst und wobei das Entleeren nach dem Anhalten der Vakuumpumpe (162) durchgeführt wird; mehr bevorzugt wobei eine oder mehrere der folgenden Bedingungen erfüllt sind:
eine Steuerung die Vakuumpumpe (162) basierend auf einem oder beidem von einer Sensorausgabe und einem Algorithmus, der sich auf den Fluss des Nichtlackierungsteils der Lackierungslösung niedriger Viskosität bezieht, automatisch anhält;
eine Steuerung ein Ventil (168) zum Entleeren des Separators (164) zu einer definierten Zeit relativ zu dem Anhalten der Vakuumpumpe (162), automatisch öffnet;
eine Steuerung das Behälterventil (117) basierend auf einem oder beidem von einer Sensorausgabe und einem Algorithmus, der sich auf den Fluss des Nichtlackierungsteils der Lackierungslösung niedriger Viskosität bezieht, automatisch schließt.

17. Verfahren nach Anspruch 6, ferner umfassend ein mindestens teilweises Trocknen des Lackierungsteils der Lackierungslösung niedriger Viskosität, der sich in den Poren oder Kanälen des Substrats (105) befindet, durch Ausführen eines oder mehrerer Trocknungsschritte; vorzugsweise ferner umfassend ein Kalzinieren des Substrats (105) mit dem mindestens teilweise getrockneten Lackierungsteil der Lackierungslösung niedriger Viskosität, der sich in den Poren oder Kanälen davon befindet.

18. Mehrstationenlackierungssystem (400), umfassend eine Lackierungsstation (420) nach einem der Ansprüche 1 bis 5, wobei das Mehrstationenlackierungssystem ferner vorzugsweise eines oder mehrere von einer Wiegestation (410/450), einer Trocknungsstation (430) und einer Kalzinierungsstation (440) umfasst.

## Revendications

1. Station de revêtement (100) comprenant :
une cuve de revêtement (110) comportant :
une chambre de réception (112) définie par une paroi (113) et conçue pour recevoir un substrat (105) ;
une entrée de fluide (115) positionnée au-dessous de la chambre de réception (112) ; et
une valve de cuve (117) positionnée au-dessous de la chambre de réception (112) ;
un couvercle de cuve (130) conçu pour une mise en prise étanche au fluide avec la cuve de revêtement (110) ;
un capteur de remplissage (135) ;
une pompe d'alimentation (120) conçue pour fournir une solution de revêtement à l'entrée de fluide (115) ;
une pompe de retour (170) conçue pour recevoir la solution de revêtement de la valve de cuve (117) ; et
une pompe à vide facultative (162) ;
les conditions suivantes étant remplies :
la chambre de réception (112) est conçue de sorte que la solution de revêtement passe à travers le substrat (105) avec sensiblement aucune solution de revêtement ne passant entre le substrat (105) et la paroi (113) de la chambre de réception (112) ;
l'entrée de fluide (115) est positionnée au-dessus de la valve de cuve (117) ; et
le capteur de remplissage (135) est positionné dans le couvercle de cuve (130).

2. Station de revêtement (100) selon la revendication 1, comprenant en outre un tuyau d'échappement (140) s'étendant au-dessous de la valve de cuve (117) et ayant une sortie (141).

3. Station de revêtement (100) selon la revendication 2, dans laquelle le tuyau d'échappement (140) s'étend dans une boîte de collecte (150) ; de préférence la pompe à vide (162) étant incluse et étant en liaison fluidique avec un orifice d'aspiration (154) sur la boîte de collecte (150) ;
plus préférentiellement une ou deux parmi les conditions suivantes étant remplies :
l'orifice d'aspiration (154) est positionné au-dessus de la sortie (141) du tuyau d'échappement (140) ;
la station de revêtement (100) comprend en outre un séparateur (164) entre et en communication fluidique avec la pompe à vide (162) et l'orifice d'aspiration (154), le séparateur (164) comprenant plus préférentiellement un bec (166) en liaison fluidique avec la boîte de collecte (150) en une position au-dessous de la sortie (141) du tuyau d'échappement (140).

4. Station de revêtement (100) selon la revendication 1, comprenant en outre un dispositif de commande configuré pour recevoir un signal du capteur et envoyer un signal de commande ; de préférence le dispositif de commande étant configuré pour commander l'une ou les deux parmi la pompe d'alimentation (120) et la vanne de cuve (117).

5. Station de revêtement (100) selon la revendication 1, dans laquelle l'une ou les deux parmi les conditions suivantes sont remplies :
la station de revêtement (100) comprend en outre un dispositif de commande configuré pour recevoir un signal de commande et exécuter une instruction de commande relative à une ou plusieurs parmi la pompe de retour (170), la pompe à vide (162) et le couvercle de cuve ; la station de revêtement (100) comprend en outre une pince à substrat (132) conçue pour venir en prise de manière mobile avec le substrat (105).

6. Procédé pour le revêtement d'un substrat avec une solution de revêtement à faible viscosité dans la station de revêtement (100) selon la revendication 1, le procédé comprenant :
le positionnement d'un substrat (105) à l'intérieur d'une chambre de réception (112) d'une cuve de revêtement (110), la chambre de réception (112) étant définie par une paroi (113), et le substrat (105) étant positionné de manière à définir une partie supérieure et une partie inférieure ;
la mise en prise d'un couvercle de cuve (130) avec la cuve de revêtement (110) pour former une mise en prise étanche au fluide ; le pompage de la solution de revêtement à faible viscosité à travers une entrée de fluide (115) positionnée au-dessous de la chambre de réception (112) à une pression suffisante pour amener la solution de revêtement à entrer dans la chambre de réception (112), pénétrer dans la partie inférieure du substrat (105), et migrer vers la partie supérieure à travers les pores ou les canaux présents dans le substrat (105) ; et
l'ouverture d'une valve de cuve (117) positionnée au-dessous de la chambre de réception (112) de manière à permettre à une partie non-de revêtement de la solution de revêtement à faible viscosité de s'écouler du substrat (105) à travers la valve de cuve (117) et de laisser une partie de revêtement de la solution de revêtement à faible viscosité dans les pores ou les canaux du substrat (105).

7. Procédé selon la revendication 6, dans lequel l'une ou les deux parmi les conditions suivantes sont remplies :
ledit positionnement comprend le déplacement du substrat (105) d'une position non-de revêtement vers la chambre de réception (112) à l'aide d'une pince à substrat mobile (132) ;
ledit pompage est effectué de telle sorte que la solution de revêtement à faible viscosité passe à travers les pores ou les canaux du substrat (105) sans que sensiblement aucune solution de revêtement à faible viscosité ne passe entre le substrat (105) et la paroi (113) de la chambre de réception (112).

8. Procédé selon la revendication 6, dans lequel ledit pompage se poursuit jusqu'à ce que la solution de revêtement à faible viscosité atteigne une hauteur prédéfinie dans la chambre de réception (112) ; de préférence la hauteur prédéfinie correspondant sensiblement à la partie supérieure du substrat (105).

9. Procédé selon la revendication 6, dans lequel ledit pompage se poursuit jusqu'à ce qu'un signal de commande de niveau de remplissage provenant d'un capteur soit envoyé à un dispositif de commande indiquant que la solution de revêtement à faible viscosité a suffisamment migré vers le haut à travers les pores ou les canaux présents dans le substrat (105).

10. Procédé selon la revendication 9, dans lequel l'une ou les deux parmi les conditions suivantes sont remplies :
le capteur est positionné dans le couvercle de cuve ;
à la réception du signal de commande de niveau de remplissage, le dispositif de commande exécute l'une ou les deux parmi les instructions suivantes :
l'arrêt automatique d'une pompe d'alimentation (124) qui pompe la solution de revêtement à faible viscosité à travers l'entrée de fluide (115) ;
l'ouverture automatique de la valve de cuve (117).

11. Procédé selon la revendication 6, dans lequel la partie non-de revêtement de la solution de revêtement à faible viscosité s'écoulant à travers la vanne de cuve (117) passe à travers une sortie (141) d'un tuyau d'échappement (140) et dans une boîte de collecte (150).

12. Procédé selon la revendication 11, dans lequel après l'ouverture de la vanne de cuve (117), le procédé comprend en outre le pompage de la partie non-de revêtement de la solution de revêtement à faible viscosité de la boîte de collecte (150) et le recyclage de la partie non-de revêtement de la solution de revêtement à faible viscosité pour un revêtement supplémentaire d'un substrat (105).

13. Procédé selon la revendication 12, dans lequel un dispositif de commande démarre automatiquement une pompe de retour (170) pour pomper la partie non-de revêtement de la solution de revêtement à faible viscosité à un moment défini par rapport à l'ouverture de la vanne de cuve (117).

14. Procédé selon la revendication 12, dans lequel après l'ouverture de la vanne de cuve (117), le procédé comprend en outre le retrait actif de la partie non-de revêtement de la solution de revêtement à faible viscosité du substrat (105) ; de préférence ledit retrait actif comprenant une aspiration à travers la boîte de collecte (150) à l'aide d'une pompe à vide (162) ;
plus préférentiellement une ou deux parmi les conditions suivantes étant remplies :
un dispositif de commande démarre automatiquement la pompe à vide (162) à un moment défini par rapport au démarrage de la pompe de retour (170) ;
le procédé comprend la mise hors prise du couvercle de cuve (130) de la cuve de revêtement (110) suffisamment pour libérer le joint étanche au fluide, plus préférentiellement un dispositif de commande mettant hors prise automatiquement le couvercle de cuve (130) de la cuve de revêtement (130) à un moment défini par rapport au démarrage de la pompe à vide (162).

15. Procédé selon la revendication 11, dans lequel un séparateur (164) est positionné entre et en communication fluidique avec la pompe à vide (162) et la boîte de collecte (150).

16. Procédé selon la revendication 15, dans lequel le procédé comprend la vidange d'une fraction de la partie non-de revêtement de la solution de revêtement à faible viscosité collectée dans le séparateur (164) dans la boîte de collecte (150) à une position au-dessous de la sortie (141) du tuyau d'échappement (140) ; de préférence le procédé comprenant l'arrêt de la pompe à vide (162), et ladite vidange étant effectuée après l'arrêt de la pompe à vide (162) ; plus préférentiellement une ou plusieurs parmi les conditions suivantes étant remplies :
un dispositif de commande arrête automatiquement la pompe à vide (162) sur la base d'une ou de deux parmi une sortie de capteur et un algorithme lié à l'écoulement de la partie non-de revêtement de la solution de revêtement à faible viscosité ;
un dispositif de commande ouvre automatiquement une vanne (168) pour vider le séparateur (164) à un moment défini par rapport à l'arrêt de la pompe à vide (162) ;
un dispositif de commande ferme automatiquement la vanne de cuve (117) sur la base d'une ou de deux parmi une sortie de capteur et un algorithme lié à l'écoulement de la partie non-de revêtement de la solution de revêtement à faible viscosité.

17. Procédé selon la revendication 6, comprenant en outre le séchage au moins partiel de la partie de revêtement de la solution de revêtement à faible viscosité qui se trouve dans les pores ou les canaux du substrat (105) en effectuant une ou plusieurs étapes de séchage ; comprenant en outre de préférence la calcination du substrat (105) avec la partie de revêtement au moins partiellement séchée de la solution de revêtement à faible viscosité dans les pores ou les canaux de celui-ci.

18. Système de revêtement multi-stations (400) comprenant un poste de revêtement (420) selon l'une quelconque des revendications 1 à 5, dans lequel le système de revêtement multi-stations comprend en outre de préférence un ou plusieurs parmi une station de pesage (410/450), une station de séchage (430) et une station de calcination (440).
